# EUROPÄISCHE PATENTSCHRIFT

(11) **EP 3 080 862 B1**
(45) Veröffentlichungstag und Bekanntmachung des Hinweises auf die Patenterteilung: **13.03.2019**
(21) Anmeldenummer: 14796775.6
(22) Anmeldetag: 13.11.2014
(51) Int. Cl.: H01M 10/617, H01M 10/6556, H01M 10/6569

(54) **KÜHLELEMENT**
COOLING ELEMENT
ÉLEMENT DE REFROIDISSEMENT

(30) Priorität: 11.12.2013 DE 102013225523
(43) Veröffentlichungstag der Anmeldung: 19.10.2016
(73) Patentinhaber: Bayerische Motoren Werke Aktiengesellschaft, 80809 München (DE)
(72) Erfinder: FLAHAUT, Nicolas, 81373 München (DE); SIERING, Sebastian, 80333 München (DE)
(86) Internationale Anmeldenummer: PCT/EP2014/074449
(87) Internationale Veröffentlichungsnummer: WO 2015/086249

(56) Entgegenhaltungen:
- EP-A1- 2 149 771
- DE-A1- 19 829 293
- DE-A1-102008 027 293
- DE-A1-102009 029 629
- DE-A1-102010 032 899
- DE-T2- 60 125 085

## Beschreibung

Die vorliegende Erfindung betrifft ein Kühlelement für ein Objekt, wobei das Objekt ein Hochvoltspeicher ist. Weiterhin betrifft die Erfindung einen Hochvoltspeicher, der ein derartiges Kühlelement umfasst.

Ein Kühlelement gemäß dem Oberbegriff des Anspruchs 1 ist außerdem aus der DE 10 2010 032899 A1 bekannt.

Der Stand der Technik kennt als Fahrzeuge insbesondere Elektrofahrzeuge und Hybridfahrzeuge. Zur Sicherung der Reichweite, Lebensdauer und abrufbarer Leistung von Elektrofahrzeugen oder Hybridfahrzeugen ist ein vordefiniertes Temperaturmanagement der Hochvoltspeicher der Fahrzeuge erforderlich. Hierzu ist entscheidend, dass zwischen einzelnen Zellen der Hochvoltspeicher eine Temperaturspreizung so gering wie möglich gehalten wird. Dazu werden Kältemittel eingesetzt, die insbesondere durch einen Kühlkreislauf des Fahrzeugs die Hochvoltspeicher sicher und zuverlässig kühlen.

Sobald mehrere Hochvoltspeicher in einem Fahrzeug vorhanden sind, ist insbesondere darauf zu achten, dass alle diese Hochvoltspeicher eine gleichmäßige Kühlung erfahren. Dies ist jedoch mit Kühlelementen aus dem Stand der Technik nicht realisierbar.

Es ist daher Aufgabe der Erfindung, ein Kühlelement für ein Objekt anzugeben, das bei einfacher und kostengünstiger Herstellung und Montage eine sichere und zuverlässige Kühlung des Objekts gewährleistet.

Die Aufgabe wird gelöst durch ein Kühlelement gemäß dem unabhängigen Anspruch 1. Somit wird die Aufgabe gelöst durch ein Kühlelement, das für ein Objekt, insbesondere für einen Hochvoltspeicher, einsetzbar ist. Das Kühlelement umfasst einen Kältemitteleingang sowie zumindest einen Verteiler. An dem Kältemitteleingang ist dem Kühlelement ein Kältemittel zuführbar, wobei das Kühlelement ausgebildet ist, Wärme von dem Objekt auf das Kältemittel zu übertragen. Der Kältemitteleingang ist insbesondere Teil einer Hauptleitung des Kühlelements, wobei die Hauptleitung mit dem Verteiler verbunden ist. Der Verteiler dient zum Aufteilen des Kältemittels auf eine Vielzahl von Parallelleitungen. Somit wird das durch den Kältemitteleingang in die Hauptleitung gelangende Kältemittel in eine Vielzahl von Parallelleitungen aufgeteilt, wobei die Parallelleitungen vorteilhafterweise zum Kühlen des Objekts dienen. Bevorzugt sind mehrere Objekte vorhanden, wobei zumindest eine Kühlleitung zumindest ein Objekt kühlt. Erfindungsgemäß liegt das Kältemittel in dem Kühlelement als zweiphasiges Gemisch vor. Der Verteiler ist wiederum erfindungsgemäß eingerichtet, das Kältemittel gleichmäßig auf die Leitungen aufzuteilen. Dazu ist eine Düse in der Hauptleitung unmittelbar vor dem Verteiler zwischen einem Expansionsventil und dem Verteiler vorhanden. Durch die Düse wird das Kältemittel homogenisiert, so dass der Verteiler ein homogenes Kältemittel erhält und somit das homogene Kältemittel an die Parallelleitungen verteilt. Da insbesondere in einem Hochvoltspeicher stets eine gleichmäßig verteilte Temperatur vorliegen muss, ist das erfindungsgemäße Kühlelement vorteilhafterweise verwendbar. Durch das gleichmäßige Aufteilen des Kältemittels in die einzelnen Parallelleitungen ist eine gleichmäßige Kühlung des Objekts gewährleistet. Daher wird insbesondere ein Hochvoltspeicher optimal gekühlt, so dass der Hochvoltspeicher eine lange Lebensdauer sowie eine optimale Energiespeicherung und Energieabgabe erlaubt.

Die Unteransprüche haben bevorzugte Weiterbildungen der Erfindung zum Inhalt.

Bevorzugt ist der Verteiler eingerichtet, dass dieser das Kältemittel derart auf die Parallelleitungen aufteilt, so dass in jeder Parallelleitung dasselbe Mischverhältnis des zweiphasigen Gemisches vorliegt. Besonders bevorzugt liegt dasselbe Mischverhältnis in jeder Parallelleitung und in der Hauptleitung vor. Das Kältemittel liegt in der Hauptleitung insbesondere als Gemisch aus flüssigen und gasförmigen Phasenbestandteilen vor. Um eine gleichmäßige Kühlung des Objekts zu gewährleisten, ist insbesondere vorgesehen, dass jede Parallelleitung dasselbe Mischverhältnis wie in der Hauptleitung aufweist. Durch das erfindungsgemäße Kühlelement mit der bevorzugten Ausgestaltung des Verteilers ist dies vorteilhaft erreichbar. Somit erlaubt der vorteilhaft ausgestaltete Verteiler eine sichere und gleichmäßige Kühlung des Objekts.

Das Kühlelement ist vorteilhafterweise derart ausgebildet, dass ein vordefinierter Bereich der Hauptleitung unmittelbar vor dem Verteiler ausschließlich gerade Abschnitte umfasst. Somit weist der vordefinierte Bereich der Hauptleitung ein homogenes Mischverhältnis des Kältemittels auf. Daher wird in dem Verteiler das Kältemittel mit der homogenen Mischung aufgeteilt, so dass auch jede Parallelleitung das homogene Gemisch aufweist. Alternativ ist in dem vordefinierten Bereich der Hauptleitung zumindest ein gebogener Abschnitt vorhanden. Dabei ist zusätzlich bevorzugt vorgesehen, dass der gebogene Abschnitt eine Störquelle umfasst. Die Störquelle ist insbesondere eine Kante und ist vorteilhafterweise in einer radial äußeren Innenwand der Hauptleitung angeordnet. Auf diese Weise wird eine Homogenisierung des Kältemittels erreicht. Insbesondere wird in dem gebogenen Abschnitt ein flüssiger Phasenbestandteil von einem gasförmigen Phasenbestandteil getrennt, da dieser durch eine vorhandene Fliehkraft an die radial äußere Innenwand der Hauptleitung gedrückt wird. Durch die Störquelle wird das Kältemittel vorteilhafterweise homogenisiert, indem der flüssige Phasenbestandteil von der Innenwand abgelöst wird.

Das Kühlelement ist außerdem bevorzugt derart ausgebildet, dass sämtliche Parallelleitungen vertikal in derselben Ebene angeordnet sind. Alternativ sind die Parallelleitungen zumindest im Wesentlichen vertikal in einer Ebene angeordnet. Als weitere Alternative sind die Parallelleitungen auf unterschiedlichen Höhenniveaus angeordnet, wobei der Verteiler oder ein Abschnitt der Hauptleitung unmittelbar vor dem Verteiler eine Störquelle umfasst. Die Störquelle ist insbesondere eine Kante an einer Innenwand der Hauptleitung. Durch die Störquelle wird eine Homogenisierung des Kältemittels erreicht. Dies vermeidet eine Trennung des zweiphasigen Gemisches, die durch die Verteilung des Kältemittels auf Parallelleitungen, die horizontal in unterschiedlichen Ebenen angeordnet sind, erfolgen kann. Da flüssige Phasenbestandteile durch die Schwerkraft auf horizontal tieferen Ebenen angesammelt werden, besteht die Gefahr, dass vertikal hoch gelegene Parallelleitungen lediglich gasförmige Phasenbestandteile erhalten und vertikal tief gelegene Parallelleitungen lediglich flüssige Phasenbestandteile erhalten. Durch das bevorzugte Vorsehen einer Störquelle wird das Kältemittel homogenisiert, so dass auch bei unterschiedlichen Höhenniveaus jede Parallelleitung dasselbe Phasengemisch erhält.

Das Kühlelement ist vorteilhafterweise derart ausgebildet, dass ein Druckverlust innerhalb der Parallelleitungen identisch oder zumindest im Wesentlichen identisch ist. Durch den identischen Druckverlust ist auch ein Kältemittelstrom innerhalb der Parallelleitungen identisch oder zumindest nahezu identisch. Daher ist eine Kühlleitung der einzelnen Parallelleitungen identisch oder zumindest im Wesentlichen identisch.

Vorteilhafterweise ist außerdem ein vordefinierter Abstand zwischen einem Expansionsventil und dem Verteiler eingehalten. Da ein Expansionsventil Auswirkungen auf die Phasenzusammensetzung des Kältemittels hat, ist der vordefinierte Abstand eingehalten. Innerhalb des vordefinierten Abstands wird eine Homogenisierung des Kältemittels erreicht, so dass der Verteiler das homogene Kältemittel an die Parallelleitungen verteilt.

Das Kühlelement weist vorteilhafterweise eine Reduzierung in zumindest einer der Parallelleitungen auf. Durch die Reduzierung sind insbesondere Druckverluste innerhalb der Parallelleitungen angleichbar. So ist eine Reduzierung vorteilhafterweise in einer Parallelleitung angebracht, die ansonsten, verglichen mit den übrigen Parallelleitungen, einen geringeren Druckverlust und damit eine erhöhte Kühlleistung aufweisen würde. Somit stellt die erfindungsgemäße Reduzierung eine gleichmäßige Kühlung des Objekts sicher.

Bevorzugt weist das Kühlelement einen symmetrischen Verteiler auf. Durch die symmetrische Verteilung wird auf die Parallelleitungen dasselbe Mischverhältnis des Kältemittels übertragen. Daher ist eine Gleichverteilung des Kältemittels auf die Parallelleitungen erreichbar.

Schließlich ist erfindungsgemäß vorgesehen, dass das zweiphasige Gemisch eine flüssige und eine gasförmige Phase umfasst. Dies ist vorteilhaft bei der Ausgestaltung von Kältekreisprozessen.

Die Erfindung betrifft weiterhin einen Hochvoltspeicher, der ein zuvor beschriebenes Kühlelement umfasst. Der Hochvoltspeicher umfasst vorteilhafterweise mehrere Batteriemodule, wobei jedem Batteriemodul zumindest eine Parallelleitung zugeordnet ist. Durch das Kühlelement ist der Hochvoltspeicher insbesondere gleichmäßig kühlbar, so dass Temperaturspreizungen zwischen den Batteriemodulen des Hochvoltspeichers weitestgehend vermieden werden. Daher ist vorteilhafterweise eine Lebensdauer und/oder eine Energiespeicherkapazität und/oder eine Energieabgabekapazität des Hochvoltspeichers optimiert.

Weitere Einzelheiten, Merkmale und Vorteile der Erfindung ergeben sich aus der nachfolgenden Beschreibung und den Figuren. Es zeigen:
- Figur 1: eine schematische Ansicht eines Kühlelements gemäß einem ersten Ausführungsbeispiel der Erfindung an einem Objekt,
- Figur 2: eine schematische Ansicht eines Kühlelements gemäß einem zweiten Ausführungsbeispiel der Erfindung,
- Figur 3: eine schematische Ansicht eines Kühlelements gemäß einem dritten Ausführungsbeispiel der Erfindung, und
- Figur 4: eine schematische Ansicht eines Kühlelements gemäß einem vierten Ausführungsbeispiel der Erfindung.

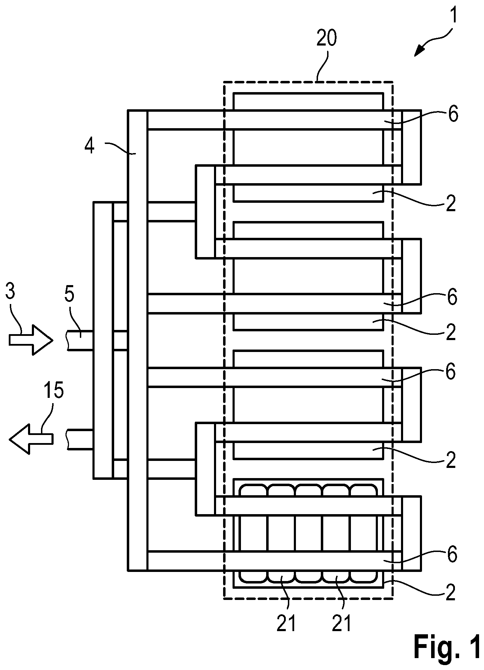

Figur 1 zeigt ein Kühlelement 1, das zur Kühlung eines Hochvoltspeichers 20 mit vier Batteriemodulen 2 dient. Die Batteriemodule 2 umfassen eine Vielzahl von Batteriezellen 21, die stets gleichmäßig zu kühlen sind. Insbesondere ist eine Temperaturspreizung innerhalb des Hochvoltspeichers 20 zu vermeiden. Daher ist jedem Batteriemodul 2 eine Parallelleitung 6 des Kühlelements 1 zugeordnet, wobei die Parallelleitungen 6 über einen Verteiler 4 mit einer Hauptleitung 5 verbunden sind. Die Hauptleitung 5 wiederum weist einen Kältemitteleingang 3 auf. Somit ist über den Verteiler 4 das Kältemittel den Parallelleitungen 6 zuführbar. Nachdem das Kältemittel den Hochvoltspeicher 20 gekühlt hat, ist das Kältemittel über einen Kältemittelausgang 15 abgebbar.

Das Kältemittel liegt an dem Kältemitteleingang 3 insbesondere als Zweiphasengemisch vor, wobei eine erste Phase eine flüssige Phase und eine zweite Phase eine gasförmige Phase des Kältemittels ist. Um das Kältemittel gleichmäßig auf die Parallelleitungen 6 zu verteilen, ist der Verteiler 4 ein symmetrischer Verteiler. Außerdem ist jedes Batteriemodul 2 und damit jede Parallelleitung 6 in derselben Ebene angeordnet, so dass sämtliche Parallelleitungen 6 dasselbe Höhenniveau wie die Hauptleitung 5 aufweisen. Daher wird der Einfluss einer vertikalen Aufteilung des Gemisches in eine flüssige Phase und in eine gasförmige Phase aufgrund der Schwerkraft minimiert, da diese Aufteilung jede der Parallelleitungen 6 betrifft. Somit wird ein Mischverhältnis zwischen fester Phase und flüssiger Phase beibehalten, so dass sowohl die Hauptleitung 5 als auch jede Parallelleitung 6 dasselbe Mischverhältnis aufweisen.

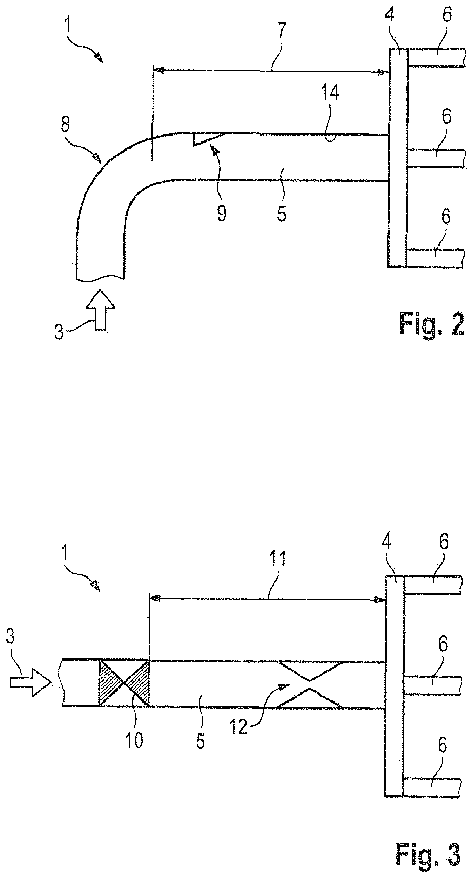

Figur 2 zeigt ein Kühlelement 1 gemäß einem zweiten Ausführungsbeispiel der Erfindung. In dem zweiten Ausführungsbeispiel weist das Kühlelement 1 dieselben Komponenten auf, wie in dem ersten Ausführungsbeispiel. Daher bezeichnen dieselben Bezugszeichen gleiche oder funktional gleiche Elemente wie in Figur 1.

Die Hauptleitung 5 weist einen gebogenen Abschnitt 8 auf. Der gebogene Abschnitt 8 liegt außerhalb eines vordefinierten Bereichs 7, so dass während des vordefinierten Bereichs 7 der Hauptleitung 5 ein Kältemittel, das über den Kältemitteleingang 3 dem gebogenen Abschnitt 8 zugeführt wird, homogenisiert wird. Daher erreicht den Verteiler 4 stets ein homogenisiertes Kältemittel, so dass der Verteiler 4 das Kältemittel gleichmäßig auf die Parallelleitungen 6 verteilt.

Insbesondere für den Fall, dass der vordefinierte Abstand zwischen Verteiler 4 und gebogenem Bereich 8 nicht eingehalten werden sollte, ist an einer radial äußeren Innenwand 14 der Hauptleitung 5, insbesondere an einer Innenwand des gebogenen Abschnitts 8, eine Störquelle 9 vorhanden. Die Störquelle 9 hat die Form einer Kante und dient zum Ablösen des Kältemittels, so dass sich das Kältemittel homogenisiert. Da in dem Bereich der Störquelle 9 vorwiegend eine flüssige Phase des Kältemittels vorherrscht, wird die flüssige Phase von der Innenwand 14 abgelöst. Somit erreicht den Verteiler 4 wiederum ein homogenes Gemisch des Kältemittels, so dass der Verteiler 4 das Kältemittel gleichmäßig auf die Parallelleitungen 6 aufteilt.

Figur 3 zeigt ein Kühlelement 1 gemäß einem dritten Ausführungsbeispiel der Erfindung. Auch hier zeigen dieselben Bezugszeichen gleiche oder funktional gleiche Elemente, wie in Figur 1 und/oder Figur 2. In dem dritten Ausführungsbeispiel weist das Kühlelement 1 ein Expansionsventil 10 in der Hauptleitung 5 auf. Da das Expansionsventil 10 einen vordefinierten Abstand 11 zu dem Verteiler 4 einhält, stellt sich eine Homogenisierung des Kältemittels innerhalb der Hauptleitung 5 ein, so dass den Verteiler 4 ein homogenisiertes Gemisch des Kältemittels erreicht. Der Verteiler 4 teilt daher das Kältemittel gleichmäßig auf die einzelnen Parallelleitungen 6 sowie auf die erste Parallelleitung 16 auf.

Sollte der vordefinierte Abstand 11 zwischen Expansionsventil 10 und Verteiler 4 nicht eingehalten sein, so ist vorteilhafterweise eine Düse 12 zwischen dem Expansionsventil 10 und dem Verteiler 4 angeordnet. Das Expansionsventil 10 birgt die Gefahr, dass das Kältemittel in die einzelnen Phasen "gasförmig" und "flüssig" aufgetrennt wird. Durch die Düse 12 wird das Kältemittel vor dem Erreichen des Verteilers 4 homogenisiert. Daher liegt ein homogenes Gemisch vor, das von dem Verteiler 4 gleichmäßig verteilt wird.

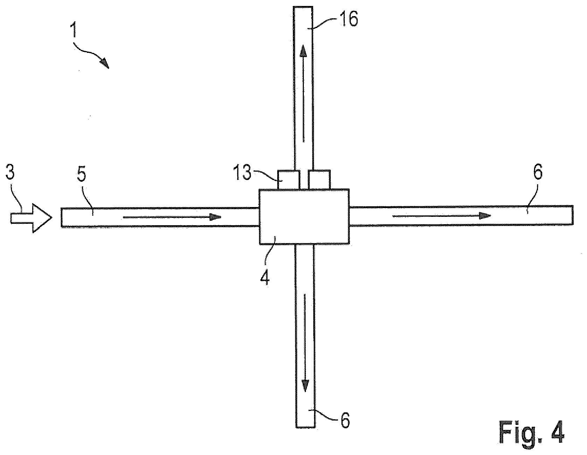

Figur 4 zeigt ein Kühlelement 1 gemäß einem vierten Ausführungsbeispiel der Erfindung. Auch hier zeigen dieselben Bezugszeichen gleiche oder funktional gleiche Elemente, wie in Figur 1 und/oder Figur 2 und/oder Figur 3. In dem vierten Ausführungsbeispiel ist ersichtlich, dass eine erste Parallelleitung 16 einen geringeren Druckabfall aufweist, als die übrigen Parallelleitungen 6. Damit weist die erste Parallelleitung 16 einen höheren Kältemittelstrom auf, so dass die erste Parallelleitung 16 eine höhere Kühlleistung vollbringt als die übrigen Parallelleitungen 6. Daher weist die erste Parallelleitung 16 eine Reduzierung 13 auf, durch die ein Druckverlust innerhalb der ersten Parallelleitung 16 an die übrigen Parallelleitungen 6 angeglichen wird. Somit ist die Kühlleistung in der ersten Parallelleitung 16 sowie in den übrigen Parallelleitungen 6 identisch.

Durch die erfindungsgemäßen Kühlelemente gemäß dem ersten Ausführungsbeispiel und/oder dem zweiten Ausführungsbeispiel und/oder dem dritten Ausführungsbeispiel ist der Hochvoltspeicher 20 vorteilhafterweise gleichmäßig kühlbar. Daher werden Temperaturspreizungen innerhalb des Hochvoltspeichers 20 vermieden. Durch diese Vermeidung von Temperaturspreizungen wird eine Reichweite, Lebensdauer und abrufbare Leistung von Elektrofahrzeugen und/oder Hybridfahrzeugen gesichert, die über den Hochvoltspeicher 20 mit dem erfindungsgemäßen Kühlelement 1 verfügen.

Die einzelnen Ausführungsbeispiele sind einzeln oder vollständig miteinander kombinierbar, so dass sich die Vorteile aus den einzelnen Ausführungsbeispielen ergänzen. Neben der Beschreibung wird explizit auf die Offenbarung der Figuren verwiesen.

### Bezugszeichenliste:

- 1: Kühlelement
- 2: Batteriemodul des Hochvoltspeichers
- 3: Kältemitteleingang
- 4: Verteiler
- 5: Hauptleitung
- 6: Parallelleitungen
- 7: Vordefinierter Bereich
- 8: Gebogener Abschnitt
- 9: Störquelle
- 10: Expansionsventil
- 11: Vordefinierter Abstand
- 12: Düsen
- 13: Reduzierung
- 14: Innenwand
- 15: Kühlmittelauslass
- 16: Erste Parallelleitung
- 20: Hochvoltspeicher
- 21: Batteriezelle

## Patentansprüche

1. Kühlelement (1) für einen Hochvoltspeicher (20), der mehrere Batteriemodule (2) umfasst, wobei die Batteriemodule (2) wiederum eine Vielzahl von Batteriezellen (21) umfassen, umfassend
- einen Kältemitteleingang (3), dem ein Kältemittel zuführbar ist und der mit einer Hauptleitung (5) verbunden ist, wobei das Kühlelement (1) ausgebildet ist, Wärme von dem Hochvoltspeicher (20) auf das Kältemittel zu übertragen, und
- zumindest einen Verteiler (4), der das Kältemittel von der Hauptleitung (5) auf eine Vielzahl von Parallelleitungen (6) aufteilt, die zum Kühlen des Hochvoltspeichers (20) dienen,
wobei das Kältemittel in dem Kühlelement (1) als zweiphasiges Gemisch vorliegt und der Verteiler (4) eingerichtet ist, das Kältemittel gleichmäßig auf die Parallelleitungen (6) aufzuteilen,
**dadurch gekennzeichnet, dass** jedem Batteriemodul (2) eine Parallelleitung (6) des Kühlelements (1) zugeordnet ist, wobei eine Düse (12) in der Hauptleitung (5) unmittelbar vor dem Verteiler (4) zwischen einem Expansionsventil (10) und dem Verteiler (4) vorhanden ist, sodass eine Homogenisierung des Kältemittels erreichbar ist.

2. Kühlelement (1) nach Anspruch 1, **dadurch gekennzeichnet, dass** der Verteiler (4) eingerichtet ist, das Kältemittel derart auf die Parallelleitungen (6) aufzuteilen, dass in jeder Parallelleitung (6) dasselbe Mischverhältnis des zweiphasigen Gemischs vorliegt.

3. Kühlelement (1) nach einem der vorhergehenden Ansprüche, **dadurch gekennzeichnet, dass**
- ein vordefinierter Bereich (7) der Hauptleitung (5) unmittelbar vor dem Verteiler (4) ausschließlich gerade Abschnitte umfasst, oder
- der vordefinierte Bereich (7) der Hauptleitung (5) unmittelbar vor dem Verteiler (4) zumindest einen gebogenen Abschnitt (8) umfasst, wobei der gebogene Abschnitt (8) eine Störquelle (9), insbesondere eine Kante, in einer radial äußeren Innenwand (14) der Hauptleitung (5) umfasst, sodass eine Homogenisierung des Kältemittels erreichbar ist.

4. Kühlelement (1) nach einem der vorhergehenden Ansprüche, **dadurch gekennzeichnet, dass**
- sämtliche Parallelleitungen (6) vertikal in einer Ebene angeordnet sind, oder
- die Parallelleitungen (6) auf unterschiedlichen Höhenniveaus angeordnet sind, wobei der Verteiler (4) oder ein Abschnitt der Hauptleitung (5) unmittelbar vor dem Verteiler eine Störquelle (9), insbesondere eine Kante, in einer Innenwand (14) umfasst, sodass eine Homogenisierung des Kältemittels erreichbar ist.

5. Kühlelement (1) nach einem der vorhergehenden Ansprüche, **dadurch gekennzeichnet, dass** ein Druckverlust innerhalb der Parallelleitungen (6) identisch oder zumindest im Wesentlichen identisch ist.

6. Kühlelement (1) nach einem der vorhergehenden Ansprüche, **dadurch gekennzeichnet, dass** ein vordefinierter Abstand (11) zwischen einem Expansionsventil (10) und dem Verteiler (4) eingehalten ist.

7. Kühlelement (1) nach einem der vorhergehenden Ansprüche, **dadurch gekennzeichnet, dass** eine Reduzierung (13) in zumindest einer der Parallelleitungen (6) eingebracht ist.

8. Kühlelement (1) nach einem der vorhergehenden Ansprüche, **dadurch gekennzeichnet, dass** der Verteiler (4) ein symmetrischer Verteiler ist.

9. Kühlelement (1) nach einem der vorhergehenden Ansprüche, **dadurch gekennzeichnet, dass** das zweiphasige Gemisch eine flüssige und eine gasförmige Phase umfasst.

10. Hochvoltspeicher (20), umfassend eine Vielzahl von Batteriemodulen (2) sowie ein Kühlelement (1) nach einem der vorhergehenden Ansprüche.

## Claims

1. A cooling element (1) for a high-voltage battery (20) which comprises a plurality of battery modules (2), wherein the battery modules (2) in turn comprise a large number of battery cells (21), comprising
- a refrigerant input (3), to which a refrigerant can be supplied and which is connected to a main line (5), wherein the cooling element (1) is designed to transmit heat from the high-voltage battery (20) to the refrigerant, and
- at least one distributor (4) which distributes the refrigerant from the main line (5) to a large number of parallel lines (6) which serve to cool the high-voltage battery (20),
wherein the refrigerant is present in the cooling element (1) as a two-phase mixture and the distributor (4) is set up to distribute the refrigerant uniformly to the parallel lines (6),
**characterised in that** a parallel line (6) of the cooling element (1) is associated with each battery module (2), with a nozzle (12) being present in the main line (5) directly before the distributor (4) between an expansion valve (10) and the distributor (4), so that homogenisation of the refrigerant can be achieved.

2. A cooling element (1) according to Claim 1, **characterised in that** the distributor (4) is set up to distribute the refrigerant to the parallel lines (6) such that the same mixing ratio of the two-phase mixture is present in each parallel line (6).

3. A cooling element (1) according to one of the preceding claims, **characterised in that**
- a predefined region (7) of the main line (5) directly before the distributor (4) comprises exclusively straight portions, or
- the predefined region (7) of the main line (5) directly before the distributor (4) comprises at least one curved portion (8), the curved portion (8) comprising a source of interference (9), in particular an edge, in a radially outer inner wall (14) of the main line (5), so that homogenisation of the refrigerant can be achieved.

4. A cooling element (1) according to one of the preceding claims, **characterised in that**
- all the parallel lines (6) are arranged vertically in one plane, or
- the parallel lines (6) are arranged at different height levels, with the distributor (4) or a portion of the main line (5) directly before the distributor comprising a source of interference (9), in particular an edge, in an inner wall (14), so that homogenisation of the refrigerant can be achieved.

5. A cooling element (1) according to one of the preceding claims, **characterised in that** a pressure loss within the parallel lines (6) is identical or at least substantially identical.

6. A cooling element (1) according to one of the preceding claims, **characterised in that** a predefined distance (11) between an expansion valve (10) and the distributor (4) is maintained.

7. A cooling element (1) according to one of the preceding claims, **characterised in that** a reduction (13) is introduced in at least one of the parallel lines (6).

8. A cooling element (1) according to one of the preceding claims, **characterised in that** the distributor (4) is a symmetrical distributor.

9. A cooling element (1) according to one of the preceding claims, **characterised in that** the two-phase mixture comprises a liquid phase and a gaseous phase.

10. A high-voltage battery (20), comprising a large number of battery modules (2) and also a cooling element (1) according to one of the preceding claims.

## Revendications

1. Elément de refroidissement (1) destiné à un accumulateur haute tension (20) qui comporte plusieurs modules de batterie (2), comportant chacun un ensemble de cellules de batterie (21), comportant :
- une entrée de fluide réfrigérant (3) dans laquelle peut-être transféré un fluide réfrigérant et qui est reliée à une conduite principale (5), l'élément de refroidissement (1) étant réalisé pour permettre de transférer de la chaleur de l'accumulateur haute tension (20) au fluide réfrigérant, et
- au moins un distributeur (4) qui subdivise le fluide réfrigérant provenant de la conduite principale (5) sur un ensemble de conduites parallèles (6) qui servent à refroidir l'accumulateur haute tension (20),
le fluide réfrigérant se présentant dans l'élément de refroidissement (1) sous la forme d'un mélange biphasé, et le distributeur (4) étant réalisé pour permettre de répartir uniformément le fluide réfrigérant dans les conduites parallèles (6),
**caractérisé en ce qu'**
à chaque module de batterie (2) est associée une conduite parallèle (6) de l'élément de refroidissement (1), une buse (12) étant située dans la conduite principale (5) directement à l'avant du distributeur (4) entre une soupape de détente (10) et le distributeur (4) de façon à permettre d'obtenir une homogénéisation du fluide réfrigérant.

2. Elément de refroidissement (1) conforme à la revendication 1,
**caractérisé en ce que**
le distributeur (4) est réalisé pour permettre de répartir le fluide réfrigérant dans les conduites parallèles (6) de sorte qu'il y ait dans chaque conduite parallèle (6) le même rapport du mélange biphasé.

3. Elément de refroidissement (1) conforme à l'une des revendications précédentes,
**caractérisé en ce qu'**
- une zone prédéfinie (7) de la conduite principale (5) située directement à l'avant du distributeur (4) comporte exclusivement des segments rectilignes, ou
- la zone prédéfinie (7) de la conduite principale (5) située directement à l'avant du distributeur (4), comporte au moins un segment courbe (8), le segment courbe (8) comprenant une source de perturbations (9) en particulier une arête dans une paroi interne située radialement à l'extérieur externe (14) de la conduite principale (5) de façon à pouvoir obtenir une homogénéisation du fluide réfrigérant.

4. Elément de refroidissement (1) conforme à l'une quelconque des revendications précédentes,
**caractérisé en ce que**
- toutes les conduites parallèles (6) sont situées verticalement dans un plan, ou
- les conduites parallèles (6) sont situées à différents niveaux de hauteur, le distributeur (4) ou un segment de la conduite principale (5) comportant, dans une paroi interne (14) directement à l'avant du distributeur une source de perturbations (9) en particulier une arête de façon à permettre d'obtenir une homogénéisation du fluide réfrigérant.

5. Elément de refroidissement (1) conforme à l'une des revendications précédentes,
**caractérisé en ce que**
la chute de pression à la partie interne des conduites parallèles (6) est identique ou au moins essentiellement identique.

6. Elément de refroidissement (1) conforme à l'une des revendications précédentes,
**caractérisé en ce qu'**
une distance (11) prédéfinie est maintenue entre la soupape de détente (10) et le distributeur (4).

7. Elément de refroidissement (1) conforme à l'une des revendications précédentes,
**caractérisé en ce qu'**
un étranglement (13) est situé dans au moins l'une des conduites parallèles (6).

8. Elément de refroidissement (1) conforme à l'une des revendications précédentes,
**caractérisé en ce que**
le distributeur (4) est un distributeur symétrique.

9. Elément de refroidissement (1) conforme à l'une des revendications précédentes,
**caractérisé en ce que**
le mélange biphasé comporte une phase liquide et une phase gazeuse.

10. Accumulateur haute tension (20) comprenant un ensemble de modules de batterie (2) ainsi qu'un élément de refroidissement (1) conforme à l'une des revendications précédentes.
